# EUROPEAN PATENT SPECIFICATION

(11) **EP 0 389 205 B1**
(45) Date of publication and mention of the grant of the patent: **27.12.1995**
(21) Application number: 90302886.8
(22) Date of filing: 16.03.1990
(51) Int. Cl.: B60T 7/12

(54) **Braking systems**
Bremssysteme
Systèmes de freinage

(30) Priority: 18.03.1989 GB 8906273; 04.08.1989 GB 8917885
(43) Date of publication of application: 26.09.1990
(73) Proprietor: LUCAS INDUSTRIES PUBLIC LIMITED COMPANY, Birmingham, B19 2XF (GB)
(72) Inventor: Farr, Glyn Phillip Reginald, Leek Woolton, Warwick, CV35 7QW (GB); Martin, Peter, West Midlands, B73 6BE (GB)
(74) Representative: Stringer, David Hiram

(56) References cited:
- EP-A- 0 173 054
- EP-A- 0 221 299
- EP-A- 0 303 470
- DE-A- 3 439 067

## Description

The present invention relates to a braking system for a vehicle, e.g. as described in EP-A-303470

In particular the present invention relates to a braking system for a vehicle, the braking system having a hill hold capability as well as providing for conventional braking on all wheels of the vehicle. Braking systems with a hill hold capability are known (EP-A-173054), one such system comprising a vacuum servo unit which can be actuated to apply all of the brakes when a control unit senses that the vehicle is at rest on an inclined surface. However with all wheels effectively locked the transition from the vehicle at rest to moving, presents problems by virtue of the engine being applied against the brakes. To provide as smooth a transition as possible sophisticated control systems are necessary. Further, braking systems with a hill hold capability conventionally rely on the clutch pedal position to indicate the drivers intention. Unfortunately clutch linings wear and the clutch pedal position is under constant adjustment. This creates many problems as the main signal for releasing the brakes is taken from a constantly varying position.

The aim of the present invention is to provide a braking system having a simple, low cost and effective hill hold capability which allows for a smooth take up of power as the vehicle moves from rest on an inclined surface.

According to the present invention there is provided a braking system comprising a master cylinder connected via a modulation unit to each wheel brake, the modulation unit being arranged to control the fluid pressure applied by the master cylinder to each wheel brake in dependence upon the speed of the vehicle wheels and the torque applied to the undriven wheels of the vehicle, the fluid pressure produced by the master cylinder being provided by a force on a brake pedal together with supplemental force provided by a vacuum servo unit, the vacuum servo unit incorporating an electromagnetic valve which, when de-energised, allows the servo unit to only operate to provide supplemental pressure when a force is applied to the brake pedal, said electromagnetic valve when energised connecting the servo unit to atmosphere so that the servo unit can by itself apply fluid pressure to a wheel brake via the modulation unit, characterised in that the electromagnetic valve is energised when speed sensors sense that the wheels have stopped rotating, an inclinometer senses the vehicle is on a gradient and a force sensor senses that a braking force is being applied to an undriven wheel, the braking force being released whenever the tractive force from the vehicle engine at least equals the braking force required to stop the vehicle from rolling away.

In one embodiment of the present invention, in, for example, a front wheel drive vehicle, a wheel speed sensor is provided for each of the four wheels of the vehicle and a braking force sensor is also associated with each of the four wheels. The sensors are all connected to a computerised controller which controls both the modulation unit and the electromagnetic valve of the vacuum servo unit. In use when the vehicle slows to a rest on an incline by the driver operating the foot brake, the controller senses when the vehicle is at rest because the wheel speed sensors indicate that all of the wheels are at zero speed, and the force sensors sense the braking force resulting in each wheel due to the tendency for the vehicle to move downhill under gravity. The force sensors do not measure the magnitude of the applied brake pressure but only the reactive force to prevent the vehicle from moving downhill. If the incline sensor does not give a signal because the incline is too shallow, the driver must hold the vehicle on the footbrake or with the parking brake. However, if the incline sensor does give a signal, the controller energises the electromagnetic valve of the servo unit so that the maximum possible fluid pressure is supplied to the brakes of all four wheels via the modulator unit, although there will still be pressure in the brakes from the drivers foot brake pressure. The vehicle is now at rest on the incline, held by fluid pressure supplied to all four brakes. The driver can thus place the vehicle in neutral gear. Whilst a force sensor is preferably provided for each wheel, the braking force sensor taking any conventional form, a single force sensor on one undriven (rear) wheel and a single sensor on a driven (front) wheel may alternatively be provided. When the driver wants to move off then power i.e. traction force, will be applied to the front driving wheels resulting in the parking brake force on the wheels being reduced to zero, i.e. the traction force is supporting the tendency for the vehicle to roll away. At this stage the controller causes the servo unit to release the fluid pressure from the brakes on the front driven wheels, and the brakes of the rear undriven wheels.

In another embodiment of the present invention, again in for example a front wheel drive vehicle, a wheel speed sensor is provided for each of the four wheels of the vehicle and a force sensor is associated with each of the undriven rear wheels of the vehicle. The sensors are all connected to a computerised controller which controls both the modulation unit and the electromagnetic valve of the vacuum servo unit. In use when the vehicle slows to a rest on an incline by the driver operating the foot brake, the controller senses when the vehicle is at rest because the wheel speed sensors indicate that all of the wheels are at zero speed, and also an inclinometer preferably also provided and connected to the controller, indicates that the vehicle is either facing up or downhill. The controller thus fires the electromagnetic valve so that fluid pressure is supplied to the modulator unit, although there will probably be pressure still in the brakes from the drivers foot brake pressure. Due to the tendency for the vehicle to move downhill under gravity, a parking braking force will result in each wheel and when this force is sensed by the force sensors and thus the controller, the modulation unit is adjusted to direct fluid pressure solely to the brakes of the rear undriven wheels, the fluid pressure applied to the brakes of the front driven wheels being dumped and the dumped fluid being pumped back to the master cylinder. The vehicle is now at rest on the incline, held by a brake force generated by fluid pressure supplied to the brakes of the undriven wheels, there being no pressure in the brakes of the front driven wheels. The driver can thus place the vehicle in neutral. The magnitude of pressure in the holding brakes will provide a potential brake force which far exceeds that necessary to hold the vehicle on a hill. Increasing the pressure even further will not increase the magnitude of braking force which is only dependent on the tendency for the vehicle to move downhill. Whilst a force sensor is preferably provided for each undriven wheel, the force sensors taking any conventional form, a single force sensor on one undriven wheel may alternatively be provided. As long as there is a parking brake force in the direction of inclination then the undriven wheel brakes will remain on. When the driver wants to move off, then power, i.e. traction force, will be applied to the unbraked driving wheels. Because the wheels are unbraked there will be no chance of introducing locked traction force into the drive train. Thus the system of the present invention will produce a smooth take up of power upon acceleration. As traction force is applied to the front driving wheels the parking brake force on the braked, undriven rear wheels decreases and begins to change its sense, i.e. reverse parking force to forward force. When the net parking brake force reaches zero, i.e. the traction force is supporting the tendency for the vehicle to roll away, then the controller causes the vacuum servo unit to release the fluid pressure in the brakes on the undriven wheels.

Should the driver decide to hold the vehicle conventionally with the handbrake, the above system will not be activated. Further, if the footbrake is applied, this is sensed by the controller and the electromagnetic valve in the servo unit is de-energised so that the hill hold facility is not operable.

The present invention thus provides a braking system which can be used to advantage in vehicles with either manual or automatic gearboxes.

Force sensors for use in the present invention may take any desired form. For example, the force sensor may be secured on a suspension arm, the suspension arm experiencing compressive and tensile forces on parking or the application of traction force. Alternatively a pair of contact switches or load sensors may be located at the top of a suspension strut to monitor tilting of the strut on the application of parking or braking force. Further, instead of a pair of contact switches, a single two-position swtich may be used to sense strut tilt and thus the braking force.

In an alternative embodiment the force sensors are adapted to sense relative movement between the suspension strut and the chassis of the vehicle, appropriate signals being passed from the force sensors to the controller to energise or de-energise the electromagnetic valve of the servo unit accordingly. The actual force sensor may be mounted on the chassis at a position adjacent to the suspension strut, or on the suspension strut adjacent to the chassis, relative movement between the chassis and suspension strut resulting in either an increase or decrease in the distance between the chassis and sensor, such increment or decrement effecting a change in flux in the sensor indicative of the direction of force.

The present invention will now be further described, by way of example, with reference to the accompanying drawings in which:-
Fig. 1 schematically illustrates one embodiment of a braking system constructed according to the present invention;
Fig. 2 schematically illustrates another embodiment of a braking system constructed according to the present invention;
Figs. 3a and 3b illustrate a form of force sensor suitable for use on the present invention;
Fig.4 illustrates the top part of a suspension strut incorporating a further force sensor arrangement;
Fig.5 schematically illustrates a suspension strut with a still further force sensor arrangement; and
Fig.6 illustrates a suspension strut and a still further force sensor arrangement.

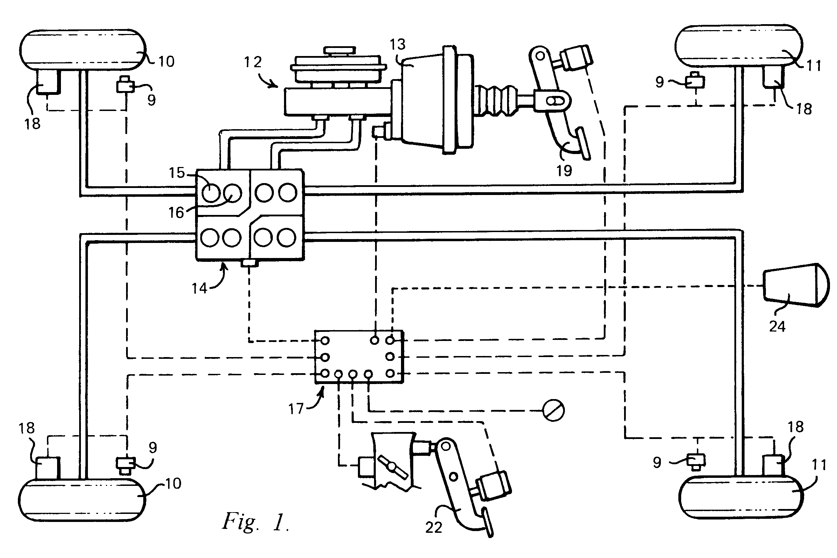

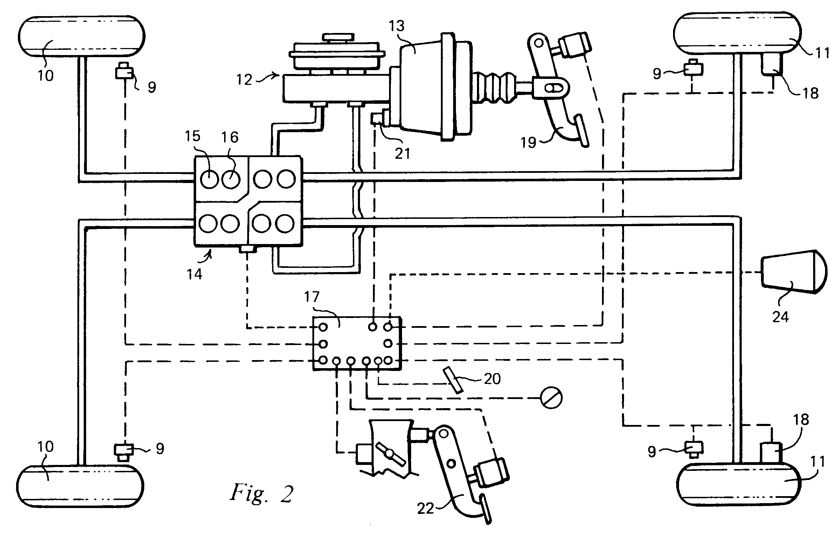

A road vehicle incorporating a braking system constructed according to the present invention is schematically illustrated in both Figs. 1 and 2 of the accompanying drawings, the road vehicle having front wheels 10, which front wheels 10 for a front wheel drive vehicle are driven by the vehicle engine (not shown) through the usual differential mechanism (not shown). The rear non-driven wheels of the vehicle are indicated at 11 and the brakes of the wheels are connected in the well known diagonal configuration with fluid being supplied by a master cylinder 12 which is operated by a vacuum servo unit 13. The braking system also incorporates an anti-skid facility which is provided by a modulation unit 14.

The modulation unit 14 typically incorporates for each wheel brake a normally open solenoid valve 15 and a normally closed solenoid valve 16. The normally open valve 15 is connected between the master cylinder 12 and the bake, and the normally closed valve 16 is connected between the brake and an expansion chamber. When during normal braking locking of a wheel is detected by signals generated by speed sensors 9, the valve 15 is closed and the valve 16 is opened. The effect of this is to close off the connection of the brake of the locking wheel to the master cylinder and to connect the brake to the expansion chamber which absorbs brake fluid and thereby releases the brake. At the same time the fluid which flows into the expansion chamber is pumped back into the master cylinder by a suitable motor driven pump. In order to re-apply the brake after the wheel has accelerated the settings of the valves are reversed but in practice the normally open valve 15 will be pulsed so that the braking force applied to the wheel will increase gradually in order to prevent the wheel locking again.

Referring to the embodiment of Fig. 1 of the accompanying drawings, the above operation of the modulation unit 14 is controlled by a computerised controller 17 to which wheel speed sensors 9 are connected, a wheel speed sensor 9 being associated with each of said wheels 10,11. Also connected to the controller 17 are four force sensors 18 of conventional construction, each force sensor 18 being associated with a wheel 10,11. The force sensors 18 and speed sensors 9, together with the servo unit 13 which is of the construction disclosed in our copending European Patent Application No. 88307406.4, and is also controllable by the controller 17, provide the braking
system with a hill hold facility. This hill hold facility comes into operation when the vehicle slows to a rest on an incline by the driver operating the foot brake. The controller 17 then senses that the vehicle is stationary because the wheel speed sensors 9 indicate that all of the wheels 10,11 are at zero speed. Further, due to the tendency for the vehicle to move downhill under the effect of gravity, a parking brake force will result in each wheel 10,11. If the incline is too shallow and the incline sensor has not given a signal, the controller takes no action and the driver must hold the vehicle in position by using the foot brake 19 or the handbrake (not shown). If however the inclination sensor gives a signal, then the controller 17 energises the electromagnetic valve 21 in the servo unit 13 so that fluid pressure is supplied to the modulation unit 14 even though there is probably still pressure in the brakes from the drivers pressure on the foot brake 19. Fluid pressure is then passed to the brakes on each of the four wheels 10,11, so that the vehicle is held at rest on the incline and the driver can engage neutral gear.

When the driver wants to move off, the power i.e. tractive force, will be applied to the driven wheels and movement of the throttle 22 will be sensed by the controller 17. The parking brake force on the wheels is thus reduced by the application of the tractive force so that when the controller 17 senses that the parking brake force is zero, the fluid pressure in the front driven wheels 10 and the fluid pressure in the rear undriven wheels 11 is released as soon as the rear force sensors 18 indicate zero i.e. the vehicle will not roll backwards. The system in Fig. 1 is also suitable for a rear wheel drive vehicle.

In another embodiment of the present invention illustrated in Fig. 2, the same reference numerals as used in Fig. 1 are used for like parts. In this embodiment the modulation unit 14 is also controlled by a computerised controller 17 to which wheel speed sensors 9 associated with each wheel, are connected. However, in contrast to the embodiment of Fig. 1, only two brake force sensors are connected to the controller 17, these two brake force sensors 18 being of conventional construction and being each associated with a respective rear undriven wheel 11. The brake force sensors 18 and speed sensors 9, together with the servo unit 13 which is also of the construction disclosed in our copending European Patent Application No. 88307406.4, and controllable by the controller 17, provide the braking system with a hill hold facility. This hill hold facility comes into operation when the vehicle slows to a rest on an incline by the driver operating the foot brake 19. The controller 17 then senses that the vehicle is stationary because the wheel speed sensors 9 indicate that all of the wheels 10,11 are at zero speed. Further, an inclinometer 20 indicates to the controller 17 that the vehicle is on an incline either facing up or downhill. The controller 17 thus activates an electromagnetic valve 21 on the servo unit 13 so that fluid pressure is supplied to the modulator unit 14 even though there will probably still be pressure in the brakes from the drivers pressure on the foot brake 19. Due to the tendency for the vehicle to move downhill under the effect of gravity, a parking brake force will result in each wheel 10,11 and when this force is sensed by the force sensors 18 and thus the controller 17, the modulation unit 14 is adjusted to direct fluid pressure solely to the brakes of the rear undriven wheels 11, the fluid pressure applied to the brakes of the front driven wheels 10 being dumped and the dumped fluid being pumped back to the master cylinder 12. The vehicle is thus now at rest on the incline, held by fluid pressure supplied to the brakes of the undriven wheels 11, there being no pressure in the brakes of the front driven wheels 10. The driver can thus place the gearbox in neutral. Whilst a force sensor 18 is provided for each rear undriven wheel 11, a single force sensor 18 on one of the rear wheels may be sufficient.

When the driver wants to move off, the power i.e. traction force, will be applied to the unbraked, driving wheels 10, movement of the throttle 22 being sensed by the controller 17. Because the front wheels 10 are unbraked there will be no chance of introducing locked driving torque into the drive train. Thus the system will produce a smooth take up of power upon acceleration. As traction force is applied to the front driving wheels 10, the parking brake force on the braked, undriven rear wheels 11 decreases and begins to change its sense. When the net parking brake force reaches zero i.e. the traction force is completely supporting the effects of the vehicle mass on the incline, then the controller 17 which has noted the operation of throttle 22, causes the servo unit 13 to release the fluid pressure in the brakes on the rear undriven wheels 11.

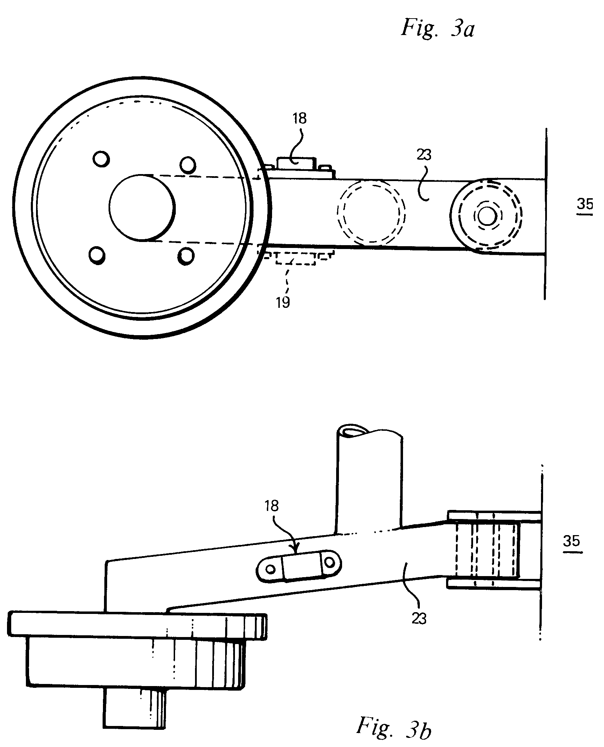

In any of the above described embodiments of the present invention, the force sensors 18 can take any desired form. One possible construction of force sensor is shown in Figs. 3a and 3b of the accompanying drawings, the torque sensor being in the form of a force sensor 18 of any suitable type, which is attached to a suspension trailing arm 23. Parking brake force as referred to hereabove generates a compressive force in the trailing arm when the vehicle faces uphill, this compressive force being monitored by the force sensor 18. When a traction force is applied by the driving wheels the compressive force in the trailing arm reduces and becomes slightly tensile as the driving wheels pull on the vehicle chassis. When this force change is detected the brakes can be released as described hereabove.

To take account of bending effects on the trailing suspension arm 23, a further force sensor 19 can be provided on the other side of the trailing arm 23.

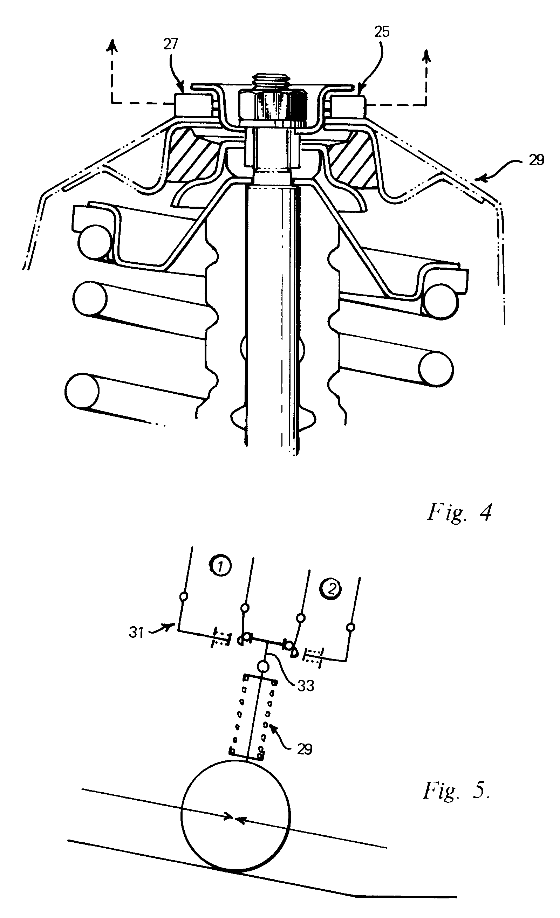

Another force sensor construction is shown in Fig.4 of the accompanying drawings, this construction comprising two contact switches 25,27 located in the top region of a suspension strut 29. In a neutral position, i.e. the vehicle static on a level surface, both switches 25,27 could be either open or closed. When parking brake force is applied then the strut top will pivot compressing the gap on the right-hand side and opening the gap on the left-hand side. Thus the switch 25 on the right-hand side would switch off or stay closed depending on its initial condition and the switch on the left-hand side would remain open or open, again depending on its initial condition. When traction force is then applied the strut top tilts over the left-hand side so reversing the switch positions and causing the release of the brakes. Further, the actual movement from parking brake force position through the neutral position to the traction force position could be used to disengage the brakes in the present invention.

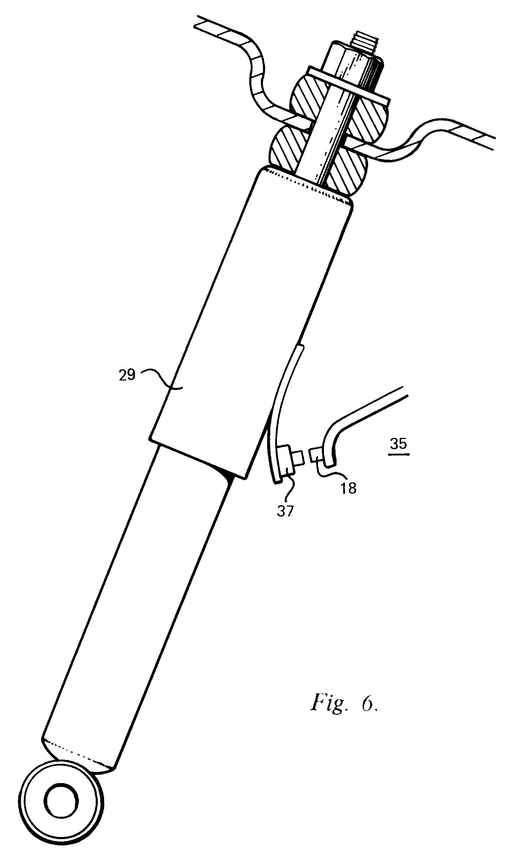

In a modified embodiment shown schematically in Fig.5 of the accompanying drawings, the two switches 25,27 are replaced by a single three-position switch 31.

Whilst the embodiment of force sensor illustrated in Fig.4 utilises two contact switches 25,27, these contact switches could, if desired, be replaced by load cells of any suitable type.

Should the driver decide to hold the vehicle in any of the above described embodiments, on the incline conventionally with the handbrake, the controller 17 will note the operation, and the hill hold facility will not be activated. Further, if the foot- brake 19 is re-applied, this will be sensed by the controller 17 and the electromagnetic valve 21 will be de-energised to release the hill hold facility.

In an alternative embodiment illustrated in Fig.6 of the accompanying drawings, the braking force sensors 18 are adapted to sense relative movement between the suspension strut 29 and the chassis 35 of the vehicle, appropriate signals being passed from the force sensors 18 to the controller 17 to energise or de-energise the electromagnetic valve 21 of the servo unit 13 accordingly. The actual brake force sensor 18, as illustrated, is mounted on the chassis 35 at a position adjacent to the suspension strut 29. Alternatively, the force sensor 18 can be mounted on the suspension strut 29 adjacent to the chassis 35, relative movement between the chassis 35 and suspension strut 29 resulting in either an increase or decrease in the distance between the chassis 35 and sensor 18, such increment or decrement effecting a change in flux in the sensor 18 indicative of the direction of force. In either arrangement the force sensor 18 can take the form of a 'Hall effect' proximity sensor with a magnet 37 being located on the other chassis or strut adjacent to the proximity sensor so that the changing distance between the sensor 18 and magnet 37 is monitored.

To reduce the likelihood of collision with another vehicle or a fixed object, a radar unit 23 is provided on the rear of the vehicle and connected to the controller 17. Alternatively or additionally a similar radar unit can be located on the front of the vehicle. Thus when a vehicle or object is approached too closely, the controller 17 can cause the servo unit 13 to apply the brakes.

To additionally provide an anti-theft facility a computer identifiable key may be used in the ignition, the ignition being connected to the controller 17 so that if the key is not used the controller 17 energises the servo unit 13 to operate all of the brakes and render the vehicle immobile.

The present invention thus provides a simple, low cost but efficient hill hold facility in a braking system, this facility providing for smooth acceleration from a stationary position on an incline.

## Claims

1. A braking system comprising a master cylinder (12) connected via a modulation unit (14) to each wheel brake, the modulation unit (14) being arranged to control the fluid pressure applied by the master cylinder (12) to each wheel brake in dependence upon the speed of the vehicle wheels (10,11) and the torque applied to the undriven wheels (11) of the vehicle, the fluid pressure produced by the master cylinder (12) being provided by a force on a brake pedal (22) together with supplemental force provided by a vacuum servo unit (13), the vacuum servo unit (13) incorporating an electromagnetic valve (21) which, when de-energised, allows the servo unit (13) to only operate to provide supplemental pressure when a force is applied to the brake pedal (22), said electromagnetic valve (21) when energised connecting the servo unit (13) to atmosphere so that the servo unit (13) can by itself apply fluid pressure to a wheel brake via the modulation unit (14), characterised in that the electromagnetic valve (21) is energised when speed sensors (9) sense that the wheels (10,11) have stopped rotating, an inclinometer (20) senses the vehicle is on a gradient and a force sensor (18) senses that a braking force is being applied to an undriven wheel, the braking force being released whenever the tractive force from the vehicle engine at least equals the braking force required to stop the vehicle from rolling away.

2. A braking system as claimed in claim 1, wherein a braking force sensor (18) is associated with each of the four wheels (10,11).

3. A braking system as claimed in claim 2, wherein the controller (17) energises the electromagnetic valve (21) so that fluid pressure is supplied to the brakes of all four wheels (10,11) via the modulation unit (14), when the speed sensors (9) sense that all of the wheels (10,11) are at zero speed and the braking force sensors (18) sense the force resulting in the respective associated wheels (10,11) due to the tendency for the vehicle to move downhill under gravity.

4. A braking system as claimed in claim 3, wherein the controller (17) releases the fluid pressure on the brakes of the driven wheels (10) and operates the electromagnetic valve (21) to cause the servo unit (13) to release the fluid pressure on the wheel brakes (10,11) of the undriven wheels when the braking force on the driven wheels (10) is reduced to zero by the application of tractive power to the driven wheels (10).

5. A braking system as claimed in claim 1, wherein a wheel speed sensor (9) is provided for each of the four wheels (10,11), and a braking force sensor (18) is associated with an undriven wheel (11), the sensors (9,18) being connected to a computerised controller (17) which controls both the modulation unit (14) and the electromagnetic valve (21) of the vacuum servo unit (13).

6. A braking system as claimed in claim 5, wherein the controller (17) energises the electromagnetic valve (21) to apply fluid pressure to the brakes of all four wheels (10,11) via the modulation unit (14) when the speed sensors (9) sense that all four wheels (10,11) are at zero speed and the inclinometer (20) indicates that the vehicle is located on an incline above a predetermined gradient, the controller (17) adjusting the modulation unit (14) to subsequently release the fluid pressure from the brakes of the driven wheels (10) when the braking force sensors (18) sense a force in an undriven wheel (11) due to the effect of gravity upon the vehicle mass.

7. A braking system as claimed in claim 5, wherein the controller (17) de-energises the electromagnetic valve (21) to release the fluid pressure applied to the brakes of the undriven wheels (11), when the torque on the undriven wheels (11) has reduced to zero.

8. A braking system as claimed in claim 1, wherein each braking force sensor (18) is in the form of a force sensor attached to a suspension trailing arm (23), which force sensor (18) is arranged to monitor compressive load in the trailing arm (23).

9. A braking system as claimed in claim 8, wherein a further force sensor (19) is provided on the trailing suspension arm (23) to monitor bending effects.

10. A braking system as claimed in claim 1, wherein the controller (17) senses the operation of a handbrake and to then not energise the electromagnetic valve (21).

11. A braking system as claimed in claim 1, wherein the controller (17) senses the operation of a foot brake (22) subsequent to the energisation of the electromagnetic valve (21) and to then de-energise the electromagnetic valve (21).

12. A braking system as claimed in claim 1, wherein a radar unit (24) is connected to the braking system to thus apply the brakes if the vehicle approaches another vehicle, closer than a predetermined distance or within a preset time interval.

## Patentansprüche

1. Bremssystem, umfassend einen Hauptzylinder (12), der über eine Modulationseinheit (14) mit allen Radbremsen verbunden ist, wobei die Modulationseinheit (14) so angeordnet ist, daß sie den vom Hauptzylinder (12) auf alle Radbremsen aufgebrachten Fluiddruck abhängig von der Geschwindigkeit der Fahrzeugräder (10, 11) und dem auf die nicht angetriebenen Räder (11) des Fahrzeuges aufgebrachten Drehmoment steuert, wobei der durch den Hauptzylinder (12) erzeugte Fluiddruck durch eine Kraft auf ein Bremspedal (22) zusammen mit einer Zusatzkraft erzeugt wird, die durch eine Vakuum-Servoeinheit (13) erzeugt wird, wobei die Vakuum-Servoeinheit (13) ein elektromagnetisches Ventil (21) aufweist, das es im aberregten Zustand ermöglicht, daß die Servoeinheit (13) nur dann zum Liefern von Zusatzdruck betätigt wird, wenn eine Kraft auf das Bremspedal (22) aufgebracht wird, wobei das genannte elektromagnetische Ventil (21) im erregten Zustand die Servoeinheit (13) mit der Atmosphäre verbindet, so daß die Servoeinheit (13) von sich aus Fluiddruck über die Modulationseinheit (14) auf eine Radbremse aufbringen kann, dadurch gekennzeichnet, daß das elektromagnetische Ventil (21) erregt wird, wenn Geschwindigkeitssensoren (9) erfassen, daß sich die Räder (10, 11) nicht mehr drehen, ein Neigungsmesser (20) erfaßt, daß sich das Fahrzeug an einem Gefälle befindet, und ein Kraftsensor (18) erfaßt, daß eine Bremskraft auf ein nicht angetriebenes Rad aufgebracht wird, wobei die Bremskraft immer dann weggenommen wird, wenn die Antriebskraft des Fahrzeugmotors wenigstens gleich der Bremskraft ist, die erforderlich ist, um das Fahrzeug am Wegrollen zu hindern.

2. Bremssystem nach Anspruch 1, wobei mit jedem der vier Räder (10, 11) ein Bremskraftsensor (18) assoziiert ist.

3. Bremssystem nach Anspruch 2, wobei das Steuergerät (17) das elektromagnetische Ventil (21) erregt, so daß über die Modulationseinheit (14) Fluiddruck auf die Bremsen aller vier Räder (10, 11) aufgebracht wird, wenn die Geschwindigkeitssensoren (9) bei allen Rädern (10, 11) eine Geschwindigkeit von Null erfassen und wenn die Bremskraftsensoren (18) die in den jeweiligen assoziierten Rädern (10, 11) aufgrund der schwerkraftbedingten Neigung des Fahrzeugs, den Berg hinabzurollen, vorliegenden Kraft erfassen.

4. Bremssystem nach Anspruch 3, wobei das Steuergerät (17) den Fluiddruck auf die Bremsen der angetriebenen Räder (10) wegnimmt und das elektromagnetische Ventil (21) betätigt, so daß die Servoeinheit (13) Bremsdruck von den Radbremsen (10, 11) der nicht angetriebenen Räder wegnimmt, wenn die Bremskraft auf die angetriebenen Räder (10) durch die Anwendung von Antriebskraft auf die angetriebenen Räder (10) auf Null reduziert wird.

5. Bremssystem nach Anspruch 1, wobei ein Radgeschwindigkeitssensor (9) für jedes der vier Räder (10, 11) vorgesehen und wobei ein Bremskraftsensor (18) mit einem nicht angetriebenen Rad (11) assoziiert ist, wobei die Sensoren (9, 18) mit einem computerisierten Steuergerät (17) verbunden sind, das sowohl die Modulationseinheit (14) als auch das elektromagnetische Ventil (21) der Vakuum-Servoeinheit steuert (15).

6. Bremssystem nach Anspruch 5, wobei das Steuergerät (17) das elektromagnetische Ventil (21) erregt, so daß es Fluiddruck auf die Bremsen aller vier Räder (10, 11) über die Modulationseinheit (14) aufbringt, wenn die Geschwindigkeitssensoren (9) erfassen, daß die Geschwindigkeit aller vier Räder (10, 11) Null beträgt, und der Neigungsmesser (20) anzeigt, daß sich das Fahrzeug an einem Gefälle oberhalb eines vorbestimmten Gradienten befindet, wobei das Steuergerät (17) die Modulationseinheit (14) so einstellt, daß nachfolgend der Fluiddruck von den Bremsen der angetriebenen Räder (10) weggenommen wird, wenn die Bremskraftsensoren (18) aufgrund von Schwerkrafteinwirkung auf die Fahrzeugmasse eine Kraft in einem nicht angetriebenen Rad (11) erfassen.

7. Bremssystem nach Anspruch 5, wobei das Steuergerät (17) das elektromagnetische Ventil (21) aberregt, so daß es den Flüssigkeitsdruck von den Bremsen der nicht angetriebe-nen Räder (11) wegnimmt, wenn das Drehmoment auf die nicht angetriebenen Räder (11) auf Null zurückgegangen ist.

8. Bremssystem nach Anspruch 1, wobei jeder Bremskraftsensor (18) die Form eines an einem Längslenker (23) befestigten Kraftsensors hat, wobei der Kraftsensor (18) die Kompressionsbelastung in dem Längslenker (23) überwacht.

9. Bremssystem nach Anspruch 8, wobei ein weiterer Kraftsensor (19) an dem Längslenker (23) vorgesehen ist, um die Biegeauswirkungen zu überwachen.

10. Bremssystem nach Anspruch 1, wobei das Steuergerät (17) die Betätigung einer Handbremse erfaßt und in diesem Fall das elektromagnetische Ventil (21) nicht erregt.

11. Bremssystem nach Anspruch 1, wobei das Steuergerät (17) die Betätigung einer Fußbremse (22) nach der Erregung des elektromagnetischen Ventils (21) erfaßt und dann das elektromagnetische Ventil (21) aberregt.

12. Bremssystem nach Anspruch 1, wobei eine Radareinheit (24) mit dem Bremssystem verbunden ist, um so die Bremsen dann zu aktivieren, wenn sich das Fahrzeug einem anderen Fahrzeug näher als bis zu einem vorbestimmten Abstand oder innerhalb eines vorbestimmten Zeitintervalls nähert.

## Revendications

1. Système de freinage comprenant un maître-cylindre (12) connecté par l'intermédiaire d'une unité de modulation (14) à chaque frein de roue, l'unité de modulation (14) étant disposée pour réguler la pression de liquide appliquée par le maître-cylindre (12) à chaque frein de roue en fonction de la vitesse des roues du véhicule (10, 11) et du couple appliqué aux roues non entraînées (11) du véhicule, la pression de liquide produite par le maître-cylindre (12) étant fournie par une force sur une pédale de frein (22) ainsi qu'une force supplémentaire fournie par une unité servo à dépression (13), l'unité servo à dépression (13) incorporant une électrovanne (21) qui, lorsqu'elle est désexcitée, permet à l'unité servo (13) de fonctionner uniquement pour fournir une pression supplémentaire quand une force est appliquée à la pédale de frein (22), ladite électrovanne (21) lorsqu'elle est excitée connectant l'unité servo (13) à l'atmosphère de telle sorte que l'unité servo (13) peut par elle-même appliquer une pression de liquide à un frein de roue par l'intermédiaire de l'unité de modulation (14), caractérisé en ce que l'électrovanne (21) est excitée quand des capteurs de vitesse (9) détectent que les roues (10, 11) ont arrêté de tourner, un inclinomètre (20) détecte que le véhicule est sur une pente et un capteur de force (18) détecte qu'une force de freinage est appliquée à une roue non entraînée, la force de freinage étant relâchée chaque fois que la force de traction provenant du moteur du véhicule est au moins égale à la force de freinage requise pour empêcher le véhicule de rouler.

2. Système de freinage selon la revendication 1, dans lequel un capteur de force de freinage (18) est associé à chacune des quatre roues (10, 11).

3. Système de freinage selon la revendication 2, dans lequel le contrôleur (17) excite l'électrovanne (21) de telle sorte qu'une pression de liquide est fournie aux freins de l'ensemble des quatre roues (10, 11) par l'intermédiaire de l'unité de modulation (14), quand les capteurs de vitesse (9) détectent que toutes les roues (10, 11) sont à la vitesse zéro et que les capteurs de force de freinage (18) détectent la force résultant dans les roues associées respectives (10, 11) due à la tendance du véhicule à descendre la pente sous l'effet de la gravité.

4. Système de freinage selon la revendication 3, dans lequel le contrôleur (17) relâche la pression de liquide sur les freins des roues entraînées (10) et actionne l'électrovanne (21) pour forcer l'unité servo (13) à relâcher la pression de liquide sur les freins de roue (10, 11) des roues non entraînées quand la force de freinage sur les roues entraînées (10) est réduite à zéro par l'application d'une puissance de traction sur les roues entraînées (10).

5. Système de freinage selon la revendication 1, dans lequel un capteur de vitesse de roue (9) est fourni pour chacune des quatre roues (10, 11), et un capteur de force de freinage (18) est associé à une roue non entraînée (11), les capteurs (9, 18) étant connectés à un contrôleur informatisé (17) qui commande à la fois l'unité de modulation (14) et l'électrovanne (21) de l'unité servo à dépression (13).

6. Système de freinage selon la revendication 5, dans lequel le contrôleur (17) excite l'électrovanne (21) pour appliquer une pression de liquide aux freins de l'ensemble des quatre roues (10, 11) par l'intermédiaire de l'unité de modulation (14) quand les capteurs de vitesse (9) détectent que toutes les quatre roues (10, 11) sont à la vitesse zéro et l'inclinomètre (20) indique que le véhicule est situé sur une côte dépassant une pente prédéterminée, le contrôleur (17) réglant l'unité de modulation (14) pour relâcher subséquemment la pression de liquide des freins des roues entraînées (10) quand les capteurs de force de freinage (18) détectent une force dans une roue non entraînée (11) due à l'effet de gravité sur la masse du véhicule.

7. Système de freinage selon la revendication 5, dans lequel le contrôleur (17) désexcite l'électrovanne (21) pour relâcher la pression de liquide appliquée aux freins des roues non entraînées (11), quand le couple sur les roues non entraînées (11) est réduit à zéro.

8. Système de freinage selon la revendication 1, dans lequel chaque capteur de force de freinage (18) a la forme d'un capteur de force attaché à un bras oscillant longitudinal de suspension (23), lequel capteur de force (18) est disposé pour contrôler la charge compressive sur le bras oscillant longitudinal (23).

9. Système de freinage selon la revendication 8, dans lequel un autre capteur de force (19) est fourni sur le bras oscillant longitudinal de suspension (23) pour contrôler les effets de flexion.

10. Système de freinage selon la revendication 1, dans lequel le contrôleur (17) détecte le fonctionnement d'un frein à main et n'excite alors pas l'électrovanne (21).

11. Système de freinage selon la revendication 1, dans lequel le contrôleur (17) détecte le fonctionnement d'un frein au pied (22) suite à l'excitation de l'électrovanne (21) et désexcite alors l'électrovanne (21).

12. Système de freinage selon la revendication 1, dans lequel une unité radar (24) est connectée au système de freinage pour ainsi appliquer les freins si le véhicule approche d'un autre véhicule, plus près qu'une distance prédéterminée ou dans les limites d'un intervalle de temps préréglé.
